# EUROPEAN PATENT APPLICATION

(11) **EP 1 473 906 A2**
(43) Date of publication of application: **03.11.2004**
(21) Application number: 04009862.6
(22) Date of filing: 26.04.2004
(51) Int. Cl.: H04L 29/08, H04L 12/28, G06F 9/46

(54) **Service management system, and method, communications unit and integrated circuit for use in such system**

(30) Priority: 28.04.2003 JP 2003124210
(71) Applicant: MATSUSHITA ELECTRIC INDUSTRIAL CO., LTD., Kadoma-shi, Osaka 571-8501 (JP)
(72) Inventor: Nakamura, Tomonori, Osaka-shi Osaka-fu 531-0064 (JP); Oashi, Masahiro, Kyotanabe-shi Kyoto-fu 610-0331 (JP); Waki, Yasushi, Soraku-gun Kyoto-fu 619-0232 (JP); Nishimura, Yasushi, Shijonawate-shi Osaka-fu 575-0003 (JP)
(74) Representative: Gassner, Wolfgang

(57) **Abstract**

When terminating an app (1), a communications unit (10) identifies any apps dependent on the app (1). In a case where an app (2) is dependent on the app (1), the communications unit (10) requests a communications unit (20) to terminate the app (2). In response to this, the communications unit (20) identifies any apps dependent on the app (2). In a case where an app (3) is dependent on the app (2), the communications unit (20) requests a communications unit (30) to terminate the app (3). In response to this, the communications unit (30) terminates the app (3), and notifies the communications unit (20) of the termination. In response to this, the communications unit (20) terminates the app ( 2 ) , and notifies the communications unit (10) of the termination. In response to this, the communications unit (10) terminates the app (1). As a result, the apps (1) to (3) are all terminated.

## Description

### BACKGROUND OF THE INVENTION

### Field of the Invention

The present invention relates to a system for controlling the operation of a plurality of electronic communications units connected together via a network and cooperating with one another, such as a digital still camera (DSC), a digital video camera (DVC), a mobile telephone, a digital TV (DTV), a home server, a set-top box (STB) and a safe-deposit box, and more particularly to a system for controlling a service that is rendered by a plurality of electronic communications units cooperating with one another.

### Description of the Background Art

Conventionally, in order to realize a service in which information is shared among a plurality of electronic communications units connected together via a wire or wireless network, such as a digital still camera (DSC), a digital video camera (DVC) , a mobile telephone, a digital TV (DTV) , a home server, a set-top box (STB) and a safe-deposit box, each electronic communications unit executes a piece of software as required for the realization of the service.

When an electronic communications unit participates in the service or exits the service, the electronic communications unit notifies the other electronic communications units involved in the service of the participation in or exit from the service. Thus, each electronic communications unit can be notified of and manage the operation of the other electronic communications units (see, for example, Japanese Laid-Open Patent Publication No. 2001-14254).

With the conventional system, however, the operation of each electronic communications unit can be terminated only by a direct instruction from the user. Therefore, when the user terminates the operation of an electronic communications unit while the electronic communications unit is rendering a certain service cooperatively with another electronic communications unit, the other electronic communications unit may be left operating.

Then, the second electronic communications unit will continue to unnecessarily reserve a memory area, failing to efficiently use the hardware resources.

### SUMMARY OF THE INVENTION

Therefore, an object of the present invention is to provide a system for realizing a service in which information is shared cooperatively among a plurality of electronic communications units, wherein the termination of the operation of one electronic communications unit is linked with the termination of the operation of the other electronic communications units.

The present invention has the following features to attain the object mentioned above. A first aspect of the present invention is directed to a system for providing an intended service using a plurality of communications units that are connected to a network and execute applications in cooperation with one another, each of the communications units including: dependence table definition means for defining a dependence table identifying dependencies between applications being executed by the communications units; dependent app identification means for, when terminating a running application, referencing the dependence table to identify a dependent application to be terminated following termination of the application being terminated; termination request means for requesting a communications unit executing the dependent application identified by the dependent app identification means to terminate the dependent application; and dependent app termination means for, when requested by another communications unit to terminate a dependent application, terminating the dependent application.

According to the first aspect, when terminating an application involved in the service, the system can terminate other applications operating in cooperation with the application being terminated. Thus, it is possible to release the hardware resources of the communications units assigned to the service, which can then be used for other applications.

Preferably, the dependence table definition means defines the dependence table while regarding an application started by a running application as a dependent application.

Thus, any application that has been started derivatively is regarded as a dependent application, whereby the system can accurately keep track of the dependencies between applications.

Preferably, the dependence table definition means defines a dependent application by associating a dependent app identifier with each running application; and the dependent app identification means identifies a dependent application based on the dependent app identifier associated with an application being terminated.

Thus, each communications terminal can identify the dependence more quickly as the dependence is defined based on the dependent app identifier.

Preferably, when a dependent application is started, the dependence table definition means associates a dependent app identifier with the dependent application, the dependent app identifier indicating on which application the dependent application is dependent.

Thus, the system can easily keep track of on which application a dependent application is dependent.

Preferably, any application started derivatively from a dependent application is a dependent application.

Thus, no independent application will be started derivatively from a dependent application, whereby the system can terminate applications involved in the service by first terminating dependent applications. Therefore, the algorithm for terminating applications involved in the service can be simply formulated.

Preferably, the dependence table identifies an independent application whose termination is independent of termination of any other applications; and each communications unit further includes independent app confirmation means for, when starting an application, prompting a user to confirm whether or not to start the application as an independent application.

Thus, the user can confirm the start of an independent application, and can obtain information on the independent application involved in the service.

Preferably, the independent app confirmation means registers a result of the confirmation by the user as a user confirmation identifier associated with the started application in the dependence table.

Thus, it is possible to easily identify whether or not an independent application has been started with the user's confirmation.

Preferably, each communications unit further includes identifier confirmation means for, when instructing another communications unit to start an application derivatively from a running application, confirming a user confirmation identifier of the running application; and if it is confirmed by the identifier confirmation means that the running application is an application that has been started without user's confirmation, the dependence table definition means regards the application started derivatively from the running application as a dependent application.

Thus, any application that can be started derivatively from an independent application that has been started without user's confirmation is a dependent application. Therefore, the system can terminate applications involved in the service by first terminating dependent applications started derivatively from an independent application that has been started without user's confirmation. Thus, the algorithm for terminating applications involved in the service can be simply formulated.

Preferably, each communications unit further includes derivative app start determination means for, when starting an application derivatively from another application running on another communications unit, determining whether or not to start the derivative application based on the number of generations notified by the other communications unit.

Thus, it is possible to prevent derivative applications from being started unnecessarily.

Preferably, each communications unit further includes derivative app start determination means for, when starting an application derivatively from another application running on another communications unit, determining whether or not to start the derivative application based on the number of applications registered in the dependence table.

Thus, it is possible to prevent derivative applications from being started unnecessarily.

Preferably, the dependence table identifies an independent application whose termination is independent of termination of any other applications; each communications unit further includes: service status notification request means for, when terminating an independent application, requesting another communications unit executing another independent application started derivatively from the independent application to notify the communications unit of a progress of the service; and service status reception means for receiving the notification of the progress of the service from the other communications unit; and the other communications unit receiving the service progress notification request notifies the communications unit of the progress of the service at a predetermined time.

Thus, even after the user terminates the independent application running on the communications unit being used by the user, whereby the communications unit exits the service, the user can be notified of the progress of the service.

Preferably, the predetermined time is when the service is terminated.

Thus, the user can be notified of the termination of the service.

Preferably, the progress of the service is notified at regular time intervals after the notification request is received.

Thus, the user can be notified of the progress of the service at regular time intervals.

Preferably, when an independent application that has been startedwithout user's confirmation and that is being executed by one of the communications units involved in the service is terminated, the communications unit notifies all the other communications units that have issued a service progress notification request of the termination of the independent application that has been started without user's confirmation.

Thus, even after the user terminates the independent application running on the communications unit being used by the user, whereby the communications unit exits the service, the user can be notified of the termination of an independent application that has been started without user's confirmation.

Preferably, the service status notification request means prompts a user to determine whether or not to issue the service progress notification request.

Thus, the user can be notified of the progress of the service only when it is important to the user.

Preferably, an application started by a user for initiating the service is handled as a root application, each communications unit further including: communications abnormality detection means for detecting whether or not a communications abnormality has occurred; communications abnormality notification means for, if the communications abnormality detection means detects a communications abnormality, notifying the communications unit executing the root application of the communications abnormality; independent app identification means for identifying an independent application whose termination is independent of termination of any other applications involved in the service; and app termination means for, if the communications unit is executing the root application and if the communications unit is notified of a communications abnormality by another communications unit, instructing other communications units to terminate any independent application identified by the independent app identification means and any dependent application dependent on the root application.

Thus, the user of the communications unit executing the root application can be notified of abnormalities of other communications units. Moreover, the system terminates all the applications. Thus, when a communications abnormality occurs, it is possible to reliably terminate all of the applications running on units involved in the service.

Preferably, each communications unit further includes root app proxy request means for, when terminating the root application started by the user for initiating the service, requesting a communications unit executing an independent application identified by the independent app identification means to act as a proxy for performing a function obtained by executing the root application; and the communications unit receiving the request from the root app proxy request means continues to render the service while using a running independent application as a root application.

Thus, the first independent application that the user has started to initiate the service can be terminated while continuing the service. Therefore, even if the user exits the service, a certain operation can be performed between the remaining communications units.

Preferably, the independent app identification means selects an independent application to serve as a proxy for the root application based on a predetermined priority.

Thus, the proxy communications unit can be selected according to a predetermined priority. For example, it is possible to select a communications unit having better specifications, or a communications unit capable of inquiring the user whether or not to continue the service when a communications abnormality occurs. Thus, the user is allowed a greater flexibility as to how the service will be rendered with a proxy communications unit.

Preferably, the priority is determined based on a network communications cost.

Thus, it is possible to reduce the communications expense.

Preferably, if no independent application is identified by the independent app identification means, the root app proxy request means designates a dependent application started derivatively from the root application as a proxy application to serve as a proxy for the root application.

Thus, a dependent application can be a proxy application, whereby it is possible to avoid a situation where there is no proxy application, and to more easily continue the service.

Preferably, each communications unit further includes service continuability determination means for determining that the service can no longer be continued if the proxy application is a dependent application and if the proxy application receives a communications failure notification from another communications unit.

Thus, when a communications abnormality occurs while a dependent application is serving as a proxy application, it is possible to reliably terminate all of the applications running on units involved in the service.

Preferably, each communications unit further includes root switching means for, if the proxy application is a dependent application and if an independent application is started derivatively from the proxy application, switching the root application to the independent application.

Thus, even after a dependent application has been designated as a proxy application, the proxy application can be switched to an independent application. Therefore, it is possible to, for example, inquire the user whether or not to continue the service when a communications abnormality occurs. Thus, the user is allowed a greater flexibility.

Preferably, the service management system includes a management server in which all independent applications involved in the service are registered, wherein if the management server is instructed by a user to terminate the service, the management server terminates all of the registered independent applications.

Thus, each communications unit no longer needs to control the operation of its application being executed for realizing the service, thereby reducing the load on the communications units.

A second aspect of the present invention is directed to a service management method for managing termination of a service provided by a plurality of communications units connected to a network and cooperating with one another, the method including: a step in which each of the communications units involved in the service defines a dependence table identifying dependencies between applications being executed by the communications units; a step in which a terminating communications unit, among the communications units, that is executing an application being terminated identifies a dependent application started derivatively from the application being terminated based on the dependence table; a step in which the terminating communications unit instructs a communications unit executing the dependent application to terminate the dependent application via the network; and a step in which the terminating communications unit terminates the application being terminated, after the dependent application is terminated.

Preferably, in the step of defining the dependence table, the dependence table is defined while regarding an application started by a running application as a dependent application.

Preferably, in the step of defining the dependence table, a dependent application is defined by associating a dependent app identifier with each running application; and in the step of identifying a dependent application, a dependent application is identified based on the dependent app identifier associated with an application being terminated.

Preferably, any application started derivatively from a dependent application is a dependent application.

Preferably, the dependence table identifies an independent application whose termination is independent of termination of any other applications; and the method further includes a step in which a communications unit starting an application prompts a user to confirm whether or not to start the application as an independent application.

Preferably, the method further includes a step in which a communications unit instructing another communications unit to start an application derivatively from a running application confirms a user confirmation identifier of the running application; and in the step of defining the dependence table, if it is confirmed that the running application is an application that has been started without user's confirmation, the dependence table is defined while regarding the application started derivatively from the running application as a dependent application.

Preferably, the service management method further includes a step in which a communications unit starting an application derivatively from another application running on another communications unit determines whether or not to start the derivative application based on the number of generations notified by the other communications unit.

Preferably, the service management method further includes a step in which a communications unit starting an application derivatively from another application running on another communications unit determines whether or not to start the derivative application based on the number of applications registered in the dependence table.

Preferably, the dependence table identifies an independent application whose termination is independent of termination of any other applications, the method further including: a step in which a communications unit terminating an independent application requests another communications unit executing another independent application started derivatively from the independent application to notify the communications unit of a progress of the service; a step in which the communications unit terminating the independent application receives the notification of the progress of the service from the other communications unit; and a step in which the communications unit receiving the service progress notification request notifies the communications unit of the progress of the service at a predetermined time.

Preferably, an application started by a user for initiating the service is handled as a root application, the method further including: a step in which each communications unit detects whether or not a communications abnormality has occurred; a step in which a communications unit that has detected a communications abnormality notifies the communications unit executing the root application of the communications abnormality; a step in which each communications unit identifies an independent application whose termination is independent of termination of any other applications involved in the service; and a step in which if a communications unit executing the root application is notified of a communications abnormality by another communications unit, the communications unit instructs other communications units to terminate any independent application identified in the step of identifying an independent application and any dependent application dependent on the root application.

Preferably, the service management method further includes a step in which if a management server in which all independent applications involved in the service are registered is instructed by a user to terminate the service, the management server terminates all of the registered independent applications.

A third aspect of the present invention is directed to a communications unit connected to a network for providing an intended service by executing an application in cooperation with at least one other communications unit connected to the network, the communications unit including: dependence table definition means for defining a dependence table identifying dependencies between applications being executed by the communications units on the network; dependent app identification means for, when terminating a running application, referencing the dependence table to identify a dependent application dependent on the application being terminated; termination request means for requesting a communications unit executing the dependent application identified by the dependent app identification means to terminate the dependent application; and dependent app termination means for, when requested by another communications unit on the network to terminate a dependent application, terminating the dependent application.

A fourth aspect of the present invention is directed to an integrated circuit for use in a communications unit connected to a network for providing an intended service by executing an application in cooperation with at least one other communications unit connected to the network, the integrated circuit including: dependence table definition means for defining, in a storage device of the communications unit, a dependence table identifying dependencies between applications being executed by the communications units on the network; dependent app identification means for, when terminating a running application, referencing the dependence table to identify a dependent application dependent on the application being terminated; termination request means for requesting a communications unit executing the dependent application identified by the dependent app identification means to terminate the dependent application; and dependent app termination means for, when requested by another communications unit on the network to terminate a dependent application, terminating the dependent application.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 illustrates an exemplary general configuration of a service management system according to the first embodiment of the present invention;
FIG. 2A shows an app table stored in a communications unit 10;
FIG. 2B shows an app table stored in a communications unit 20;
FIG. 2C shows an app table stored in a communications unit 30;
FIG. 3 is a flow chart illustrating the operation of the service management system as a whole according to the first embodiment of the present invention when a service is being initiated;
FIG. 4 shows an example of information stored in a service management server;
FIG. 5 shows an example of profile information;
FIG. 6 is a flow chart illustrating the operation of the service management system as a whole according to the first embodiment of the present invention when a service is being terminated;
FIG. 7A shows an app table stored in the communications unit 10;
FIG. 7B shows an app table stored in the communications unit 20;
FIG. 7C shows an app table stored in the communications unit 30;
FIG. 8 is a flow chart illustrating the operation of the service management system as a whole according to the second embodiment of the present invention;
FIG. 9 shows an example of independent application information registered in a root communications unit; and
FIG. 10 is a flow chart illustrating the operation of the service management system as a whole according to the third embodiment of the present invention.

### DESCRIPTION OF THE PREFERRED EMBODIMENTS

### (First Embodiment)

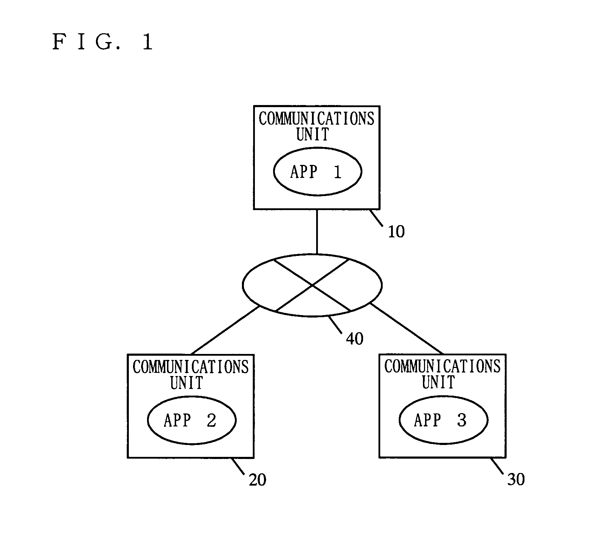

FIG. 1 illustrates an exemplary general configuration of a service management system according to the first embodiment of the present invention. Referring to FIG. 1, the service management system includes three electronic communications units (hereinafter referred to simply as "communications units") 10, 20 and 30, and a network 40. The communications units are connected together via the network 40. While the number of communications units is three in the illustrated example, it may alternatively be less than or more than three. For the sake of simplicity, an example where three communications units are connected to the network 40 will be described below.

The network 40 may be a wire network, a wireless network, or a combination thereof. Typically, the network 40 is a combination of the Internet, a telephone network, a mobile telephone network, a PHS network, an ADSL network, etc.

Each of the communications units 10, 20 and 30 may be a unit being able to communicate with other units , such as a digital still camera (DSC) , a digital video camera (DVC), a mobile telephone, a digital TV (DTV), ahome server, aset-topbox (STB), asafe-deposit box, etc.

Each of the communications units 10, 20 and 30 may have a hardware configuration known in the art. Specifically, each unit may include a communications section for communicating with other units via a network, a CPU (central processing unit) for controlling the operation of the unit, amemory for storing programs to be executed by the CPU and other necessary data, a recording device for storing programs and data, a display section, such as a liquid crystal panel, for displaying an image as controlled by the CPU, and an input section, such as a button switch, for receiving instructions from the user.

Each of the communications units 10, 20 and 30 reads out an application program (hereinafter referred to simply as an "application" ) from the recording device and stores it in the memory, and the CPU executes the application stored in the memory. In the present embodiment, the application executed by the communications unit 10 will be referred to as "Application 1" ( "App 1" in the figures) , the application executed by the communications unit 20 as "Application 2" ("App 2" in the figures), and the application executed by the communications unit 30 as "Application 3" ("App 3" in the figures). While applications executed by the communications units 10, 20 and 30 may include many applications other than Applications 1 to 3, the present invention will be described below with these three applications for the sake of simplicity.

In the present embodiment, the term "service" refers to a function that is realized by Applications 1 to 3 running in cooperation with one another via a network.

Applications being executed by communications units are classified into two types of applications, i.e., independent applications and dependent applications.

The term "independent application" refers to an application that is being executed by a communications unit and that will not be terminated even if another application being executed by another communications unit is terminated.

The term "dependent application" refers to an application that is being executed by a communications unit and that will be terminated following the termination of another application being executed by another communications unit. Which application's termination causes the termination of a dependent application is determinedwhen the dependent application is started. Typically, an application that is started by another, already running, application is regarded as a dependent application. Moreover, typically, an application that is started derivatively from a dependent application can only be a dependent application.

Each communications unit stores an app table identifying each currently running application as either an independent application or a dependent application. In other words, an app table is a table (dependence table) identifying the dependencies between applications running on different communications units.

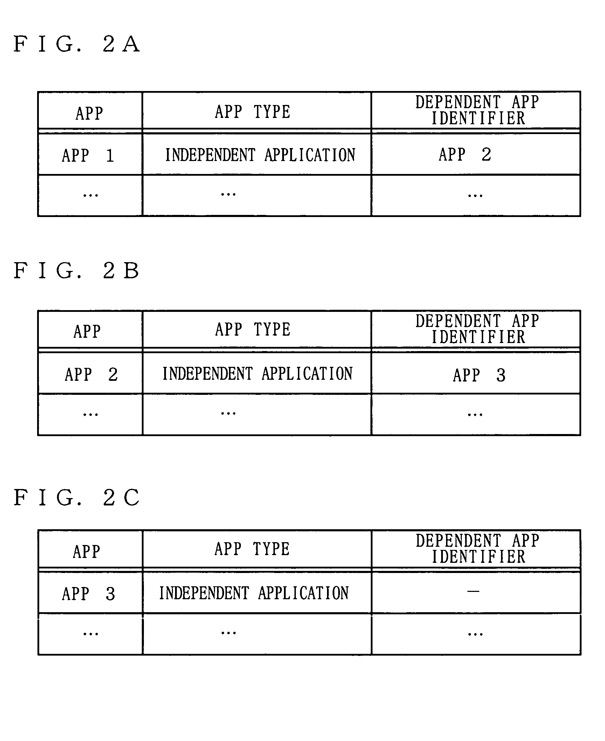

FIGs. 2A to 2C show app tables stored in the communications units 10, 20 and 30, respectively, while a service is being rendered by the communications units.

FIG. 2A shows an app table stored in the communications unit 10. FIG. 2B shows an app table stored in the communications unit 20. FIG. 2C shows an app table stored in the communications unit 30.

Each app table has a "running app" column identifying the name of each running application, an "app type" column identifying the type of each running application, and a "dependent app identifier" column identifying an application that is dependent on the running application. In FIGs. 2A to 2C, the symbol "-" means that no "dependent app identifier" is specified for the running application.

For example, in FIGS. 2A to 2C, Application 1 is specified as an independent application. Application 2 is specified as the "dependent app identifier" for Application 1. In the present system, this means that Application 2 will be terminated following the termination of Application 1. However, Application 1 will not be terminated even if Application 2 is terminated. Application 1, being an independent application, will not be terminated following the termination of another application.

Application 2 is specified as a dependent application. Application 3 is specified as the "dependent app identifier" for Application 2. In the present system, this means that Application 3 will be terminated following the termination of Application 2. However, Application 2 will not be terminated even if Application 3 is terminated.

No "dependent app identifier" is specified for Application 3. In the present system, this means that no other applications will be terminated following the termination of Application 3.

Note that a plurality of applications may be specified in the "dependent app identifier" column for a running application.

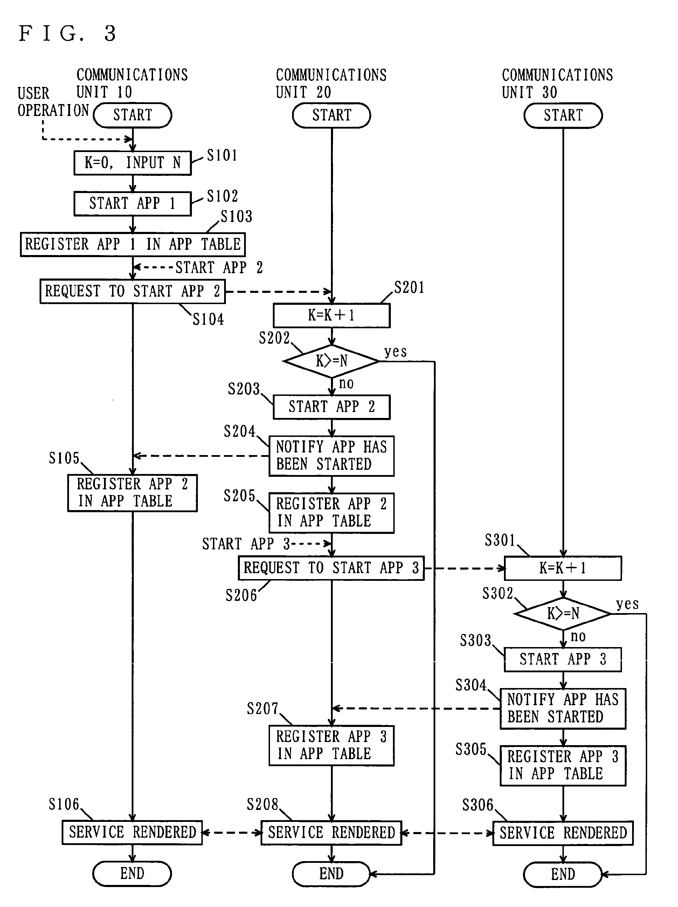

FIG. 3 is a flow chart illustrating the operation of the service management system as a whole according to the first embodiment of the present invention when a service is being initiated. Now, referring to FIG. 3, the operation of the service management system as a whole when a service is being initiated will be described.

When an instruction to start Application 1 is received from the user, the communications unit 10 sets the number of applications started derivatively from Application 1 (hereinafter referred to as the "derivative app count") K to zero (step S101). In this step, the communications unit 10 prompts the user to input the upper limit value N for the derivative app count (step S101). The derivative app count represents the number of generations of derivative applications. The value N may alternatively be determined based on a predetermined default value.

Then, the communications unit 10 starts Application 1 (step S102), and registers Application 1 as an independent application in the app table (step S103). Alternatively, the communications unit 10 may prompt the user to input the type of Application 1. Alternatively, when starting Application 1, the communications unit 10 may prompt the user to confirm whether or not Application 1 should be started as an independent application. The following description assumes that Application 1 is an independent application.

Then, assume that Application 1 instructs the communications unit 10 to request to run Application 2 on the communications unit 20 as an application dependent on Application 1. Then, the communications unit 10 requests the communications unit 20 to start Application 2 by sending, to the communications unit 20, the derivative app count K, the upper limit value N, and the app type of Application 2, while specifying the app type as a dependent application (step S104) . Alternatively, Application 1 may prompt the user to specify the app type of Application 2.

In the present embodiment, it is assumed that Application 1 knows, before issuing the instruction to start Application 2, whether the communications unit 20 has enough resources to execute Application 2 (the CPU performance, the memory size, hardware to be used by Application 2 , etc.). This can be realized, for example, as follows.

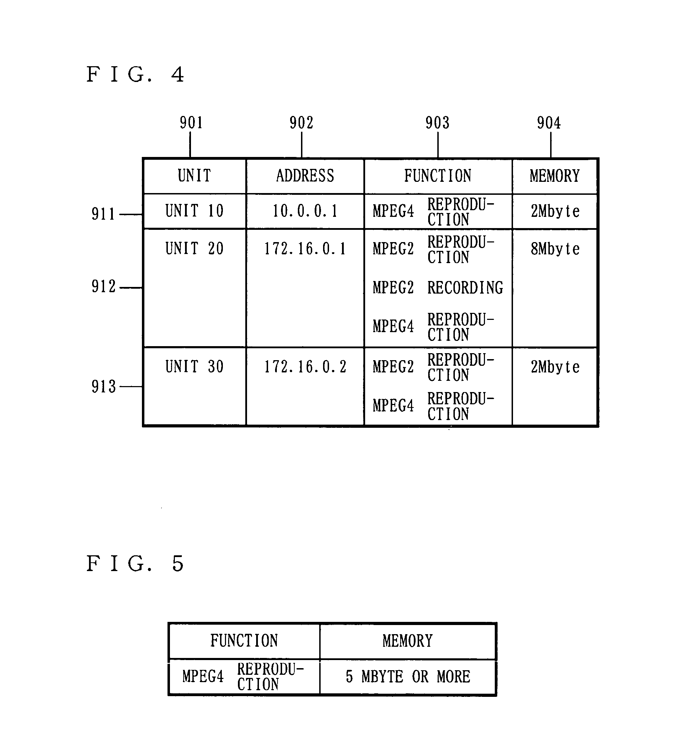

A service management server (not shown in FIG. 1) may store information on various units owned by the user who is running Application 1. The service management server may be, for example, a home server, or the like. FIG. 4 shows an example of information stored in the service management server. Column 901 shows an identifier of each communications unit. Column 902 shows a network address of each communications unit. Column 903 shows the function (s) that can be provided by each communications unit. For example, FIG. 4 shows that the communications unit 30 can reproduce motion pictures recorded in the MPEG2 or MPEG4 format. Column 904 shows the memory size of each communications unit. As the memory size is larger, the communications unit can execute a larger application.

Application 1 sends profile information to the service management server, and the service management server returns the address of each communications unit that satisfies the conditions specified in the profile information. The "profile information" as used herein refers to performance specifications that need to be satisfied in order to execute Application 2. FIG. 5 shows an example of the profile information. The profile information of FIG. 5 specifies a communications unit capable of reproducing MPEG2 motion pictures and having a memory size of 5 MB or more. The service management server searches for a communications unit that satisfies the profile information, and returns the address of the communications unit to Application 1. In the example of FIG. 4, the communications unit 20 satisfies the profile information required by Application 1, whereby the service management server returns the address of the communications unit 20 to Application 1. There may be more than one unit that satisfies the profile information. In such a case, the service management server may return only the address of a selected one of the qualified units to Application 1, or Application 1 may select one of the addresses of all the qualified units that are returned from the service management server. Alternatively, Application 1 may prompt the user to make the selection.

In response to the request to start Application 2, the communications unit 20 increments the received derivative app count K (step S201). Then, the communications unit 20 determines whether or not the derivative app count K is equal to or greater than the upper limit value N (step S202). If K is equal to or greater than N, the communications unit 20 exits the process without starting Application 2. If K is less than N, the communications unit 20 starts Application 2 (step S203) , notifies the communications unit 10 that Application 2 has been started (step S204), and proceeds to step S205.

In response to the notification that Application 2 has been started, the communications unit 10 registers Application 2 in the "dependent app identifier" column of the app table, where Application 1 is registered as an independent application (step S105).

The operation of the communications unit 20 continues as follows. In step S205, the communications unit 20 registers Application 2 as a dependent application in the app table.

Then, assume that Application 2, while it is running, instructs the communications unit 20 to request to run Application 3 on the communications unit 30 as an application dependent on Application 2. Then, the communications unit 20 requests the communications unit 30 to start Application 3 by sending, to the communications unit 30, the derivative app count K, the upper limit value N, and the app type of Application 3, while specifying the app type as a dependent application (step S206). The operation in which Application 2 selects the communications unit 30 as a unit on which to run Application 3 will not be described below as it is similar to the operation of starting Application 2.

In response to the request to start Application 3, the communications unit 30 increments the received derivative app count K(stepS301). Then, the communications unit 30 determines whether or not the derivative app count K is equal to or greater than the upper limit value N (step S302). If K is equal to or greater than N, the communications unit 30 exits the process without starting Application 3. If K is less than N, the communications unit 30 starts Application 3 (step S303) , notifies the communications unit 20 that Application 3 has been started (step S304), and proceeds to step S305.

In response to the notification that Application 3 has been started, the communications unit 20 registers Application 3 in the "dependent app identifier" column of the app table, where Application 2 is registered as a dependent application (step S207).

The operation of the communications unit 30 continues as follows. In step S305, the communications unit 30 registers Application 3 as a dependent application in the app table.

As described above, Applications 1, 2 and 3 are executed by the communications units 10, 20 and 30, respectively. Thus, a service desired by the user is rendered by the communications units 10, 20 and 30 (steps S106, S208 and S306).

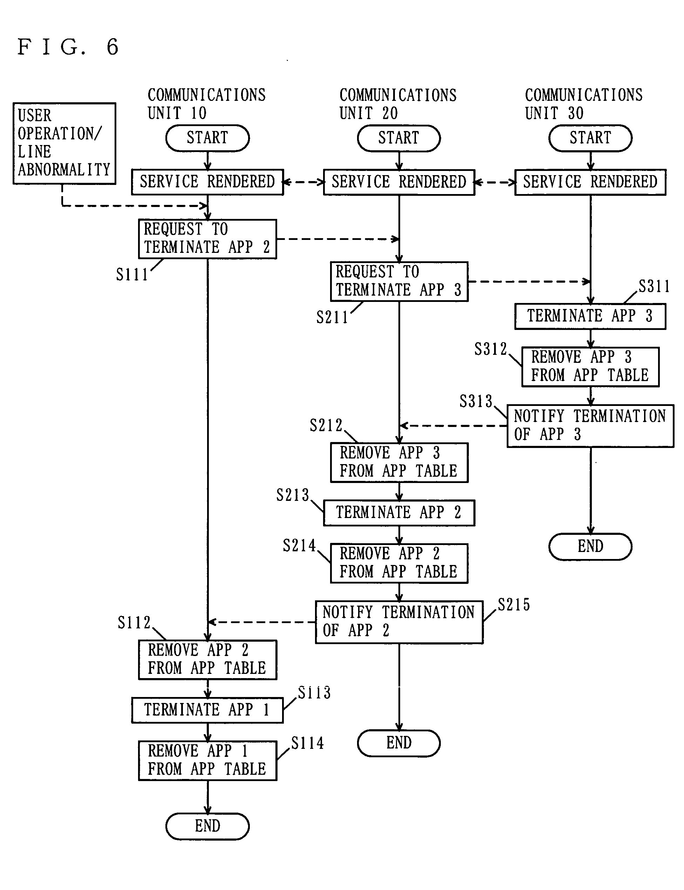

FIG. 6 is a flow chart illustrating the operation of the service management system as a whole according to the first embodiment of the present invention when a service is being terminated. Now, referring to FIG. 6, the operation of the service management system as a whole when a service is being terminated will be described.

Assume that a request to terminate Application 1 is issued to the communications unit 10 by an instruction from the user, due to a line abnormality, etc., while a service is being rendered by the communications units 10, 20 and 30.

Then, the communications unit 10 references the app table to determine whether or not there is an application dependent on Application 1. If there is an application dependent on Application 1, the communications unit 10 requests the communications unit executing the dependent application to terminate the dependent application (step S111). Since it is herein assumed that Application 2 is dependent on Application 1, the communications unit 10 requests the communications unit 20, executing Application 2, to terminate Application 2. Note that it is assumed that the communications unit 10 stores the correspondence between each application and the address of the communications unit executing the application in the app table. The correspondence is not shown in the figures.

In response to the request to terminate Application 2, the communications unit 20 references the app table to determine whether or not there is an application dependent on Application 2. If there is an application dependent on Application 2, the communications unit 20 requests the communications unit, executing the dependent application, to terminate the dependent application (step S211). Since it is herein assumed that Application 3 is dependent on Application 2, the communications unit 20 requests the communications unit 30, executing Application 3, to terminate Application 3. Note that it is assumed that the communications unit 20 stores the correspondence between each application and the address of the communications unit executing the application in the app table. The correspondence is not shown in the figures.

In response to the request to terminate Application 3, the communications unit 30 determines whether or not there is an application dependent on Application 3. If there is an application dependent on Application 3, the communications unit 30 requests the communications unit, executing the dependent application, to terminate the dependent application. If there is no application dependent on Application 3, the communications unit 30 terminates Application 3. Note that it is assumed that the communications unit 30 stores the correspondence between each application and the address of the communications unit executing the application in the app table. The correspondence is not shown in the figures. Since it is herein assumed that there is no application dependent on Application 3, the communications unit 30 terminates Application 3, releases the hardware resources of the communications unit 30 reserved for the execution of Application 3 (step S311), removes the registered entry for Application 3 from the app table (step S312), notifies the communications unit 20 of the termination of Application 3 (step S313), and exits the process.

In response to the notification that Application 3 has been terminated, the communications unit 20 removes information on Application 3 from the app table (step S212) . In the illustrated example, the communications unit 20 removes Application 3 from the "dependent app identifier" column. Then, the communications unit 20 terminates Application 2, releases the hardware resources of the communications unit 20 reserved for the execution of Application 2 (step S213), removes the registered entry for Application 2 from the app table (step S214), notifies the communications unit 10 of the termination of Application 2 (step S215), and exits the process.

In response to the notification that Application 2 has been terminated, the communications unit 10 removes information on Application 2 from the app table (step S112) . In the illustrated example, the communications unit 10 removes App 2 from the "dependent app identifier" column. Then, the communications unit 10 terminates Application 1, releases the hardware resources of the communications unit 10 reserved for the execution of Application 1 (step S113), removes the registered entry for Application 1 from the app table (step S114), and exits the process.

FIG. 6 illustrates an example where Application 3 dependent on Application 2 and Application 2 dependent on Application 1 are terminated successively when the communications unit 10 terminates Application 1. The process flow will be similar to this also when the communications unit 20 terminates Application 2 by itself. Specifically, the communications unit 30 terminates Application 3 dependent on Application 2, but will never terminate Application 1, which is independent. When the communications unit 30 terminates Application 3 by itself, it will not terminate any other applications running on other communications units since there is no application dependent on Application 3.

Thus, according to the first embodiment, each application started derivatively by another application that is started by the user is registered in each communications unit, and then a service is rendered to the user. If a specified application is terminated while a service is being rendered, any applications dependent on the specified application will be terminated following the termination of the specified application. Thus, it is possible to prevent a derivatively-started application from unnecessarily reserving hardware resources.

Note that it is assumed in the first embodiment that there is a master-slave relationship between applications, i.e. , Application 2 being dependent on Application 1, and Application 3 being dependent on Application 2. Alternatively, applications may be equally dependent on each other, instead of being a master or a slave to each other. For example, Application 1 and Application 2 may be equally dependent on each other so that Application 2 will be terminated following the termination of Application 1, and Application 1 will be terminated following the termination of Application 2.

For example, the communications unit 20 may issue a request to terminate Application 1, which is dependent on Application 2. Then, in response to the request to terminate Application 1, the communications unit 10 searches for any applications dependent on Application 1. Since Application 2 is dependent on Application 1, the communications unit 10 requests the communications unit 20 to terminate Application 2. Since the communications unit 20 has already requested to terminate applications dependent on Application 2, Application 2 is terminated to prevent an infinite loop, and the communications unit 10 is notified to finally terminate Application 1. Each communications unit can handle termination requests while distinguishing the first and second termination requests from each other to avoid an infinite loop.

Note that a communications unit may handle any application started derivatively from a dependent application always as a dependent application.

Note that a communications unit starts an application derivatively based on the derivative app count in the first embodiment, it may alternatively determine whether or not an application can be started based on the number of applications registered in the app table.

Note that while an upper limit is set for the derivative app count in the first embodiment in order to prevent an unnecessarily large number of applications from being started derivatively, it is understood that steps S101, S102, S201, S202, S301 and S302 may be omitted if there is no need to limit the derivative app count.

### (Second Embodiment)

The overall configuration of the system of the second embodiment is similar to that of the first embodiment as illustrated in FIG. 1.

In the second embodiment, applications being executed by communications units are classified into three types of applications, i.e., user-confirmed independent applications, non-user-confirmed independent applications, and dependent applications.

The term "user-confirmed independent application" refers to an application that is started as an independent application with the user's confirmation that it should be started as such. A user-confirmed independent application, being executed by a communications unit, will not be terminated even if another application being executed by another communications unit is terminated.

The term "non-user-confirmed independent application" refers to an application that is started in response to an instruction from a user-confirmed independent application. A non-user-confirmed independent application, being executed by a communications unit, will not be terminated even if another application being executed by another communications unit is terminated. A non-user-confirmed application is an independent application that is started without the user's confirmation that it should be started as such.

A user-confirmed independent application and a non-user-confirmed independent application are different from each other in that they are labeledwith different user confirmation identifiers, i.e., "user-confirmed" and "non-user-confirmed", respectively.

The term "dependent application" refers to an application that is being executed by a communications unit and that will be terminated following the termination of another application being executed by another communications unit. Which application's termination causes the termination of a dependent application is determinedwhen the dependent application is started. In the present embodiment, any application started derivatively from a non-user-confirmed independent application is always regarded as a dependent application. Moreover, an application that is started derivatively from a user-confirmed independent application may be a dependent application.

For example, where the communications unit 10 is a mobile telephone, the communications unit 20 is a home server, and the communications unit 30 is a digital TV, the user may receive a service in which a TV program received by the digital TV is transferred to the mobile telephone via the home server. In response to an instruction from the user, the mobile telephone launches a transfer application for requesting the digital TV to transfer the TV program. The transfer application is a user-confirmed independent application. In response to an instructionfrom the transfer application,the home server launches a conversion application for converting the TV program received by the digital TV into a format that can be reproduced on the mobile telephone. The conversion application is a non-user-confirmed independent application. In response to an instruction from the conversion application, the digital TV launches a transfer application for transferring the received TV program to the home server. The transfer application is a dependent application dependent on the conversion application.

Another exemplary application of the present embodiment is as follows. In response to an instruction from the user, the mobile telephone launches a program recording request application (regarded as a user-confirmed independent application) for requesting the home server to record the TV program. In response to an instruction from the program recording request application, the home server launches a program recording application (regarded as a non-user-confirmed independent application) for recording the TV program received by the digital TV in a recording device of the home server. In response to an instruction from the program recording application, the digital TV launches a transfer application for transferring the received TV program to the home server. The transfer application is a dependent application dependent on the program recording application.

Each communications unit stores an app table identifying each currently running application as either a user-confirmed independent application, a non-user-confirmed independent application, or a dependent application.

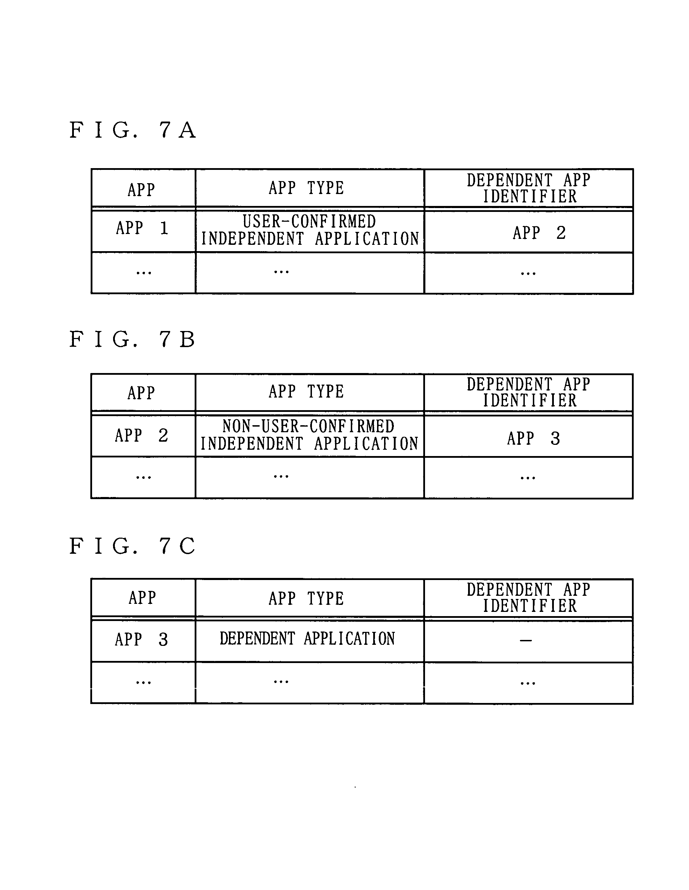

FIGs. 7A to 7C show app tables stored in the communications units 10, 20 and 30, respectively, while a service is being rendered by the communications units. FIG. 7A shows an app table stored in the communications unit 10. FIG. 7B shows an app table stored in the communications unit 20. FIG. 7C shows an app table stored in the communications unit 30.

Each app table has a "running app" column identifying the name of each running application, an "app type" column identifying the type of each running application, and a "dependent app identifier" column identifying an application that is dependent on the running application. The "dependent app identifier" associated with a user-confirmed independent application identifies a non-user-confirmed independent application started derivatively from the user-confirmed independent application. The "dependent app identifier" associated with a non-user-confirmed independent application identifies a dependent application started derivatively from the non-user-confirmed independent application. In FIGs. 7A to 7C, the symbol " - " means that no "dependent app identifier" is specified for the running application.

Note that the app tables of FIG. 7A to 7C show an example where a user-confirmed independent application and a non-user-confirmed independent application are running on different communications units for the sake of simplicity. A user-confirmed independent application and a non-user-confirmed independent application may alternatively be running on the same communications unit, in which case the user-confirmed independent application and the non-user-confirmed independent application are both registered in the app table of the communications unit. For example, where the user-confirmed independent application is an application responsible for providing a user interface, and the non-user-confirmed independent application is an application responsible for a process necessary for rendering the service (e. g. , program recording, format conversion, etc.), the user-confirmed independent application and the non-user-confirmed independent application are registered in the same communications terminal.

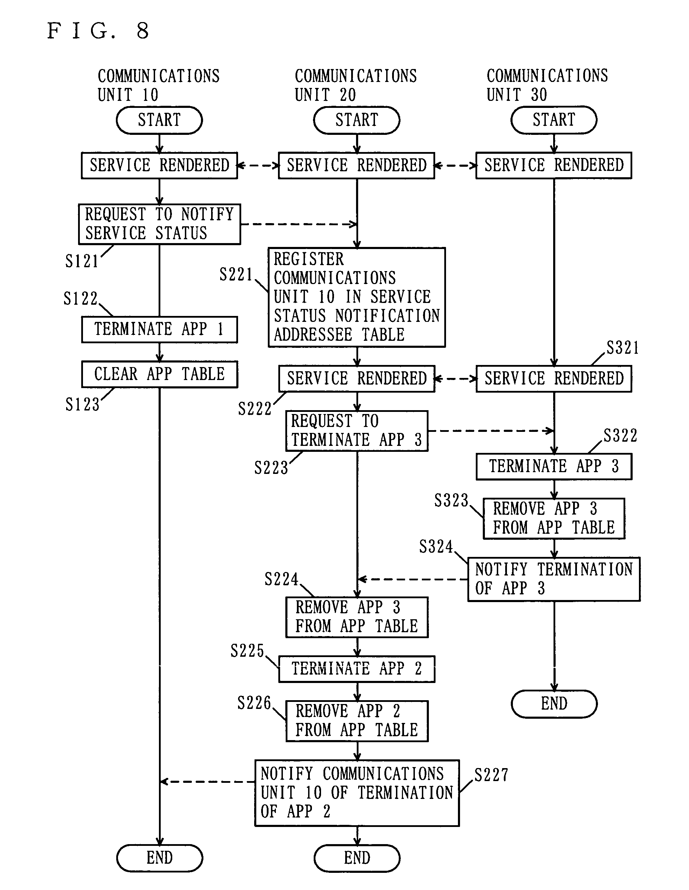

FIG. 8 is a flow chart illustrating the operation of the service management system as a whole according to the second embodiment of the present invention. Now, referring to FIG. 8, the operation of the service management system as a whole according to the second embodiment will be described.

In the illustrated operation, a service is rendered by the communications units 10, 20 and 30, and even after the user-confirmed independent application being executed by the communications unit 10 used by the user is terminated, the service continues to be rendered.

First, assume that the communications unit 10 is instructed by a user's operation, or the like, to terminate only Application 1 while leaving Application 2 and Application 3 running in cooperation with each other. In response to the instruction, the communications unit 10 references the app table to identify the communications unit 20 as a unit executing a non-user-confirmed independent application dependent on Application 1. As in the first embodiment, each communications unit registers a communications unit that is executing an application registered in the app table. The communications unit 10 requests the identified communications unit (i.e. , the communications unit 20) to keep Application 2 and Application 3 running in cooperation with each other, and to notify the communications unit 10 when the cooperative operation is terminated (step S121). In this step, the communications unit 10 sends, to the communications unit 20, information needed to identify the communications unit 10, such as the email address thereof, as addressee information. The request is referred to as a service status notification request. Whether or not to issue a service status notification request can be determined by the user.

Then, the communications unit 10 terminates Application 1 (step S122), clears the app table thereof (step S123), and exits the process.

In response to the service status notification request, the communications unit 20 registers the email address, etc. , sent from the communications unit 10 in a service status notification addressee table (not shown) (step S221).

Thereafter, the service continues to be rendered by the communications unit 20 and the communications unit 30 (steps S222 and S321).

When the service terminated as an intended operation is completed by Application 2 and Application 3, the communications unit 20 references the app table to determine whether or not there is a dependent application dependent on the non-user-confirmed independent application (Application 2). Since Application 3 is registered as a dependent application in the illustrated example, the communications unit 20 requests the communications unit 30, executing Application 3, to terminate Application 3 (step S223).

In response to the request to terminate Application 3, the communications unit 30 references the app table to determine whether or not there is an application dependent on Application 3. Since there is no dependent application dependent on Application 3 in the illustrated example, the communications unit 30 terminates Application 3, releases the hardware resources of the communications unit 30 reserved for the execution of Application 3 (step S322), removes information on Application 3 from the app table (step S323), notifies the communications unit 20 of the termination of Application 3 (step S324), and exits the process.

In response to the notification that Application 3 has been terminated, the communications unit 20 removes information on Application 3 from the app table (step S224), terminates Application 2, and releases the hardware resources of the communications unit 20 reserved for the execution of Application 2 (step S225). Then, the communications unit 20 removes the registered entry for Application 2 from the app table (step S226), references the service status notification addressee table to identify the address of the communications unit 10, notifies the communications unit 10 of the termination of the service (step S227) , and exits the process. The communications unit 10 receives the notification as a service progress notification.

Thus, the system of the second embodiment handles an application started directly by the user and an application necessary for rendering the service separately from each other so that even after the communications unit operated directly by the user exits the service, the service can still be rendered by the other communications units. Then, when the service is terminated, the communications unit operated directly by the user is notified of the termination of the service. Thus, the user can confirm that the service has been terminated normally.

For example, assume that the communications unit 10 is a portable communications terminal such as a mobile telephone, the communications unit 20 is a reproduction device for reproducing video information, audio information, etc., and the communications unit 30 is a recording device for recording information reproduced by the reproduction device. With such a system, the user can use the portable communications terminal to give an instruction to record the information reproduced by the reproduction device in the recording device, and even if the portable communications terminal exits the communications session, the recording process continues between the reproduction device and the recording device. Then, after the recording process is completed, the results of the recording process are notified to the portable communications terminal. Thus, the user can confirm the normal completion of the recording process. This can be very useful in practice.

Note that in the second embodiment, after the service is terminated, the communications unit 20 notifies the termination of the service to any communications unit registered in the service status notification addressee table. Alternatively, the communications unit 20 may notify the communications unit 10 of the progress of the service at regular time intervals after being notified of the termination of Application 1. Alternatively, the communications unit 20 may notify the communications unit 10 of the termination of a specified one of the applications running on the communications unit 20 and the communications unit 30 in cooperation with each other.

Note that when a communications unit terminates a non-user-confirmed independent application, the communications unit may notify another communications unit that is registered as a service status notification addressee of the termination of the non-user-confirmed independent application.

Note that while user-confirmed independent applications and non-user-confirmed independent applications are used in the second embodiment, it is understood that simply independent applications, as described above in the first embodiment, may be used in addition. In such a case, the overall operation will be a combination of the present embodiment and the first embodiment.

### (Third Embodiment)

In the third embodiment, the communications unit executing an independent application that the user has started for receiving a service can be disconnected from the network (i.e., can exit the service) while reassigning the role being played by the communications unit to another communications unit. The third embodiment also shows how each application can be terminated in each communications unit when it becomes impossible to continue the service due to a communications error occurring during the course of the service.

In the third embodiment, applications are classified into two types of applications as in the first embodiment, i.e. , independent applications and dependent applications. Note however that an independent application may be a root application that is started directly by the user when initiating the service. Whether or not an independent application is a root application can be determined by a root application identifier associated with the independent application.

When an unexpected event, such as a communications abnormality, occurs, a communications unit executing the root application (hereinafter referred to as a "root communications unit") receives and analyzes information on the event to perform an appropriate process (e.g., notification to the user, forced termination of the service, etc.). Thus, the root communications unit has an important role in rendering the service. Therefore, each communications unit stores information for identifying the root communications unit so as to know which communications unit is the root communications unit. When an unexpected event, such as a communications abnormality, occurs, a communications unit notifies the root communications unit of the abnormality. If the root communications unit is notified of the abnormality, the communications unit terminates any independent applications running on units involved in the service and any dependent applications dependent on the root application.

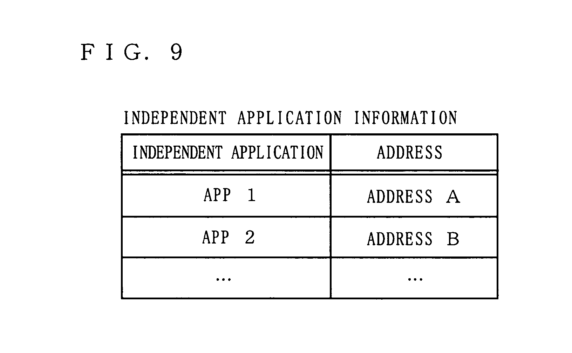

In order to terminate all the applications when the communications unit executing the root application is notified of the abnormality, it is necessary to identify independent applications running on units involved in the service. Therefore, the root communications unit registers information on each independent application running on the system. FIG. 9 shows an example of information on independent applications registered in the root communications unit (hereinafter referred to as "independent application information"). As shown in FIG. 9, each independent application running on the system and the network address of the communications unit executing the independent application are registered in the root communications unit.

Once the root communications unit exits the service, other communications units can no longer receive information on abnormalities. Therefore, in a case where a service is to be continued after the root communications unit exits the service, another communications unit needs to act as a proxy performing the role of the root communications unit. The communications unit acting as a proxy will be referred to as a "proxy communications unit", and an application executed by the proxy communications unit in place of the root application will be referred to as a "proxy application". An application that can be a proxy application is an independent application whose termination is independent of the termination of any other applications.

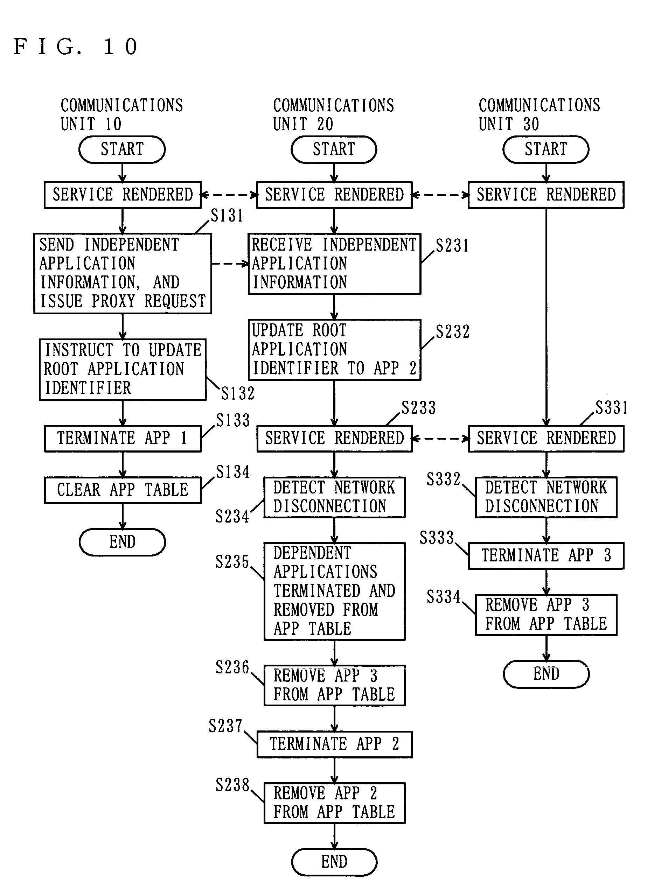

FIG. 10 is a flow chart illustrating the operation of the service management system as a whole according to the third embodiment of the present invention. Now, referring to FIG. 10, the operation of the service management system as a whole according to the third embodiment will be described.

In the illustrated operation, a service is rendered by the communications units 10, 20 and 30, and the user instructs the communications unit 10 to terminate only Application 1 while leaving Application 2 and Application 3 running in cooperation with each other. Assume that the communications unit 10 acts as the root communications unit, the communications unit 20 acts as the proxy communications unit, Application 1 is the root application, Application 2 is an independent application, and Application 3 is a dependent application.

In response to the instruction from the user, the communications unit 10 references the independent application information to identify any independent application other than Application 1 (Application 2 in the illustrated example) , and sends the independent application information to the communications unit executing the identified independent application (the communications unit 20 in the illustrated example) and requests the communications unit to act as a proxy for the root communications unit (step S131).

Then, the communications unit 10 instructs the communications unit 20 to update the root application identifier in the app table of the communications unit 20 to "Application 2" (step S132). Then, the communications unit 10 terminates Application 1 (step S133), clears the app table (step S134), and exits the process.

The communications unit 20 receives the independent application information from the communications unit 10 (stepS231), and updates the root application identifier in response to the instruction from the communications unit 10 (step S232).

Thereafter, the service continues to be rendered by the communications unit 20 and the communications unit 30 (steps S233 and S331).

If a communications error occurs during the course of the service, Application 2 and Application 3 can no longer operate in cooperation with each other, and the service can no longer be rendered. In such a case, each of the communications unit 20 and the communications unit 30 detects the network disconnection (steps S234 and S332).

Since Application 3 is a dependent application, the communications unit 30 forcibly terminates Application 3 (step S333), removes information on Application 3 from the app table (step S334), and exits the process. As in the first embodiment, if there are any dependent applications dependent on Application 3 running on other communications units, the communications unit 30 requests the communications units to terminate all the dependent applications.

Since Application 2 is the proxy application, the communications unit 20 references the app table to terminate all the dependent applications started derivatively from Application 2, and removes information on the terminated applications from the app table (step S235), as in the first embodiment.

Then, the communications unit 20 removes Application 3 from the app table (step S236), terminates Application 2 (step S237), removes information on Application 2 from the app table (step S238), and exits the process. Note that before terminating Application 2, the communications unit 20 may ask the user whether or not to continue the service. The communications unit 30 can be instructed to restart Application 3 if the user decides to continue the service, or Application 2 can be terminated otherwise.

As described above, in the third embodiment, when the communications unit executing the root application exits the service, one of the remaining communications units acts as a proxy and executes a root application to control the termination of dependent applications. Therefore, even if the communications unit executing the root application exits the service, it is possible to smoothly continue the service.

For example, the third embodiment can be applied to the following cases. Assume that the communications unit 10 is a portable communications terminal such as a mobile telephone, the communications unit 20 is a reproduction device for reproducing video information, audio information, etc. , and the communications unit 30 is a recording device for recording information reproduced by the reproduction device. With such a system, the user can use the portable communications terminal to give an instruction to record the information reproduced by the reproduction device in the recording device, and even if the portable communications terminal exits the communications session, the recording process continues between the reproduction device and the recording device.

Assume another case where a plurality of people are engaged in online chat using portable communications terminals such as mobile telephones. Even if the user who started the online chat service exits the service, one of the remaining portable communications terminals will act as a proxy communications unit, whereby the online chat service can be continued between the remaining portable communications terminals.

Note that the other types of applications described above in the second embodiment (i.e., user-confirmed independent applications and non-user-confirmed independent applications) may be used in the third embodiment. In such a case, either a user-confirmed independent application or a non-user-confirmed independent application may be the root application. Such a determination may be made depending on the service to be rendered.

Note that Application 2 is used as a proxy application because Application 2 is the only independent application except for Application 1 in the third embodiment. Where there are a plurality of independent applications in addition to a root application, a communications unit may use any of the independent applications as a proxy application.

For example, a user-confirmed independent application may be preferentially designated as a proxy application, whereby an independent application that is not auser-confirmed independent application will not be designated as a proxy application.

Alternatively, each communications unit may store information on each network to which a communications unit executing an application is connected, so that an independent application being executed by a communications unit that is connected to the most inexpensive network is preferentially designated as a proxy application.

Note that if no independent application other than the root application is registered in the independent application information, a communications unit may designate a dependent application as a proxy application. In such a case, if the dependent application serving as a proxy application receives a communications failure notification, the dependent application may always determine that the service can no longer be continued and forcibly terminate all the applications running on the units involved in the service.

Moreover, where a dependent application is serving as a proxy application, the communications unit executing the dependent application may instruct another communications unit executing an independent application started derivatively from the dependent application to designate the independent application as the root application.

Note that while each communications unit stores an app table (dependence table) in the embodiments above, an app table may alternatively be stored in a management server connected to the network. In such a case, the successive termination of applications is realized with different terminals referencing the app table stored in the management server.

When the management server receives a notification from the user that the service is to be terminated, the management server may reference the app table to identify all the independent applications registered in the app table and instruct the communications units executing the identified independent applications to terminate the independent applications. In response to this, each communications unit successively terminates dependent applications to terminate the independent application. Thus, the service can be terminated smoothly.

Note that it is assumed in the embodiments above that each communications unit is previously provided with the function of performing the associated operation as described above. Alternatively, the system of the present invention as described above can be realized by the service management server distributing via the network a program for realizing the function of each unit or by the service provider distributing a recording medium storing such a program.

Note that each communications unit realizes an intended function with a program loaded onto its memory and executed by its CPU in the embodiments above. However, the manner in which each communications unit realizes its function is not limited to this. For example, each communications unit may realize its function by a dedicated integrated circuit (LSI) having a similar functionality to that of the CPU for executing a program. Alternatively, a functionality similar to that of the CPU for executing the program may be realized by a plurality of integrated circuits. Alternatively, a memory storing a program for realizing the intended function of each communications unit and a CPU for executing the program may be integrated together into a single-chip integrated circuit, and the function of each communications unit can be realized by using such an integrated circuit.

While the invention has been described in detail, the foregoing description is in all aspects illustrative and not restrictive. It is understood that numerous other modifications and variations can be devised without departing from the scope of the invention.

## Claims

1. A system for providing an intended service using a plurality of communications units that are connected to a network and execute applications in cooperation with one another, each of the communications units (10, 20, 30) comprising:
dependence table definition means (S103, S105, S205, S207, S305) for defining a dependence table identifying dependencies between applications being executed by the communications units;
dependent app identification means (S111, S211, S311) for, when terminating a running application, referencing the dependence table to identify a dependent application to be terminated following termination of the application being terminated;
termination request means (S111, S211) for requesting a communications unit executing the dependent application identified by the dependent app identification means to terminate the dependent application; and
dependent app termination means (S311, S312, S212 to S214) for, when requested by another communications unit to terminate a dependent application, terminating the dependent application.

2. The service management system according to claim 1, wherein the dependence table definition means defines the dependence table while regarding an application started by a running application as a dependent application.

3. The service management system according to claim 1, wherein:
the dependence table definition means defines a dependent application by associating a dependent app identifier with each running application; and
the dependent app identification means identifies a dependent application based on the dependent app identifier associated with an application being terminated.

4. The service management system according to claim 3, wherein when a dependent application is started, the dependence table definition means associates a dependent app identifier with the dependent application, the dependent app identifier indicating on which application the dependent application is dependent.

5. The service management system according to claim 1, wherein any application started derivatively from a dependent application is a dependent application.

6. The service management system according to claim 1, wherein:
the dependence table identifies an independent application whose termination is independent of termination of any other applications; and
each communications unit further comprises independent appconfirmationmeansfor, when starting an application, prompting a user to confirm whether or not to start the application as an independent application.

7. The service management system according to claim 6, wherein the independent app confirmation means registers a result of the confirmation by the user as a user confirmation identifier associated with the started application in the dependence table.

8. The service management system according to claim 1, wherein:
each communications unit further comprises identifier confirmation means for, when instructing another communications unit to start an application derivatively from a running application, confirming a user confirmation identifier of the running application; and
if it is confirmed by the identifier confirmation means that the running application is an application that has been started without user's confirmation, the dependence table definition means regards the application started derivatively from the running application as a dependent application.

9. The service management system according to claim 1, wherein each communications unit further comprises derivative app start determination means for, when starting an application derivatively from another application running on another communications unit, determining whether or not to start the derivative application based on the number of generations notified by the other communications unit.

10. The service management system according to claim 1, wherein each communications unit further comprises derivative app start determination means for, when starting an application derivatively from another application running on another communications unit, determining whether or not to start the derivative application based on the number of applications registered in the dependence table.

11. The service management system according to claim 1, wherein:
the dependence table identifies an independent application whose termination is independent of termination of any other applications;
each communications unit further comprises:
service status notification request means (S121) for, when terminating an independent application, requesting another communications unit executing another independent application started derivatively from the independent application to notify the communications unit of a progress of the service; and
service status reception means for receiving the notification of the progress of the service from the other communications unit; and
the other communications unit receiving the service progress notification request notifies the communications unit of the progress of the service at a predetermined time (S227).

12. The service management system according to claim 11, wherein the predetermined time is when the service is terminated.

13. The service management system according to claim 11, wherein the progress of the service is notified at regular time intervals after the notification request is received.

14. The service management system according to claim 11, wherein when an independent application that has been started without user's confirmation and that is being executed by one of the communications units involved in the service is terminated, the communications unit notifies all the other communications units that have issued a service progress notification request of the termination of the independent application that has been started without user's confirmation.

15. The service management system according to claim 11, wherein the service status notification request means prompts a user to determine whether or not to issue the service progress notification request.

16. The service management system according to claim 1, wherein an application started by a user for initiating the service is handled as a root application, each communications unit further comprising:
communications abnormality detection means for detecting whether or not a communications abnormality has occurred;
communications abnormality notification means for, if the communications abnormality detection means detects a communications abnormality, notifying the communications unit executing the root application of the communications abnormality;
independent app identification means for identifying an independent application whose termination is independent of termination of any other applications involved in the service; and
app termination means for, if the communications unit is executing the root application and if the communications unit is notified of a communications abnormality by another communications unit, instructing other communications units to terminate any independent application identified by the independent app identification means and any dependent application dependent on the root application.

17. The service management system according to claim 16, wherein:
each communications unit further comprises root app proxy request means (S131) for, when terminating the root application started by the user for initiating the service, requesting a communications unit executing an independent application identified by the independent app identification means to act as a proxy for performing a function obtained by executing the root application; and
the communications unit receiving the request from the root app proxy request means continues to render the service while using a running independent application as a root application (S232).

18. The service management system according to claim 17, wherein the independent app identification means selects an independent application to serve as a proxy for the root application based on a predetermined priority.

19. The service management system according to claim 18, wherein the priority is determined based on a network communications cost.

20. The service management system according to claim 17, wherein if no independent application is identified by the independent app identification means, the root app proxy request means designates a dependent application started derivatively from the root application as a proxy application to serve as a proxy for the root application.

21. The service management system according to claim 20, wherein each communications unit further comprises service continuability determination means (S234, S332) for determining that the service can no longer be continued if the proxy application is a dependent application and if the proxy application receives a communications failure notification from another communications unit.

22. The service management system according to claim 20, wherein each communications unit further comprises root switching means for, if the proxy application is a dependent application and if an independent application is started derivatively from the proxy application, switching the root application to the independent application.

23. The service management system according to claim 1, comprising a management server in which all independent applications involved in the service are registered, wherein if the management server is instructed by a user to terminate the service, the management server terminates all of the registered independent applications.

24. A service management method for managing termination of a service provided by a plurality of communications units connected to a network and cooperating with one another, the method comprising:
a step (S103, S105, S205, S207, S305) in which each of the communications units involved in the service defines a dependence table identifying dependencies between applications being executed by the communications units;
a step (S111, S211, S311) in which a terminating communications unit, among the communications units, that is executing an application being terminated identifies a dependent application started derivatively from the application being terminated based on the dependence table;
a step (S111, S211) in which the terminating communications unit instructs a communications unit executing the dependent application to terminate the dependent application via the network; and
a step (S311, S312, S212 to S214) in which the terminating communications unit terminates the application being terminated, after the dependent application is terminated.

25. The service management method according to claim 24, wherein in the step of defining the dependence table, the dependence table is defined while regarding an application started by a running application as a dependent application.

26. The service management method according to claim 24, wherein:
in the step of defining the dependence table, a dependent application is defined by associating a dependent app identifier with each running application; and
in the step of identifying a dependent application, a dependent application is identified based on the dependent app identifier associated with an application being terminated.

27. The service management method according to claim 24, wherein any application started derivatively from a dependent application is a dependent application.

28. The service management method according to claim 24, wherein:
the dependence table identifies an independent application whose termination is independent of termination of any other applications; and
the method further comprises a step in which a communications unit starting an application prompts a user to confirm whether or not to start the application as an independent application.

29. The service management method according to claim 24, wherein:
the method further comprises a step in which a communications unit instructing another communications unit to start an application derivatively from a running application confirms auser confirmation identifier of the running application; and
in the step of defining the dependence table, if it is confirmed that the running application is an application that has been started without user's confirmation, the dependence table is defined while regarding the application started derivatively from the running application as a dependent application.

30. The service management method according to claim 24, further comprising a step in which a communications unit starting an application derivatively from another application running on another communications unit determines whether or not to start the derivative application based on the number of generations notified by the other communications unit.

31. The service management method according to claim 24, further comprising a step in which a communications unit starting an application derivatively from another application running on another communications unit determines whether or not to start the derivative application based on the number of applications registered in the dependence table.

32. The service management method according to claim 24, wherein the dependence table identifies an independent application whose termination is independent of termination of any other applications, the method further comprising:
a step (S121) in which a communications unit terminating an independent application requests another communications unit executing another independent application started derivatively from the independent application to notify the communications unit of a progress of the service;
a step in which the communications unit terminating the independent application receives the notification of the progress of the service from the other communications unit; and
a step (S227) in which the communications unit receiving the service progress notification request notifies the communications unit of the progress of the service at a predetermined time.

33. The service management method according to claim 24, wherein an application started by a user for initiating the service is handled as a root application, the method further comprising:
a step in which each communications unit detects whether or not a communications abnormality has occurred;
a step in which a communications unit that has detected a communications abnormality notifies the communications unit executing the root application of the communications abnormality;
a step in which each communications unit identifies an independent application whose termination is independent of termination of any other applications involved in the service; and
a step in which if a communications unit executing the root application is notified of a communications abnormality by another communications unit, the communications unit instructs other communications units to terminate any independent application identified in the step of identifying an independent application and any dependent application dependent on the root application.

34. The service management method according to claim 24, further comprising a step in which if a management server in which all independent applications involved in the service are registered is instructed by a user to terminate the service, the management server terminates all of the registered independent applications.

35. A communications unit (10, 20, 30) connected to a network for providing an intended service by executing an application in cooperation with at least one other communications unit connected to the network, the communications unit comprising:
dependence table definition means (S103, S105, S205, S207, S305) for defining a dependence table identifying dependencies between applications being executed by the communications units on the network;
dependent app identification means (S111, S211, S311) for, when terminating a running application, referencing the dependence table to identify a dependent application dependent on the application being terminated;
termination request means (S111, S211) for requesting a communications unit executing the dependent application identified by the dependent app identification means to terminate the dependent application; and
dependent app termination means (S311, S312, S212 to S214) for, when requested by another communications unit on the network to terminate a dependent application, terminating the dependent application.

36. An integrated circuit for use in a communications unit connected to a network for providing an intended service by executing an application in cooperation with at least one other communications unit connected to the network, the integrated circuit comprising:
dependence table definition means (S103, S105, S205, S207, S305) for defining, in a storage device of the communications unit, a dependence table identifying dependencies between applications being executed by the communications units on the network;
dependent app identification means (S111, S211, S311) for, when terminating a running application, referencing the dependence table to identify a dependent application dependent on the application being terminated;
termination request means (S111, S211) for requesting a communications unit executing the dependent application identified by the dependent app identification means to terminate the dependent application; and
dependent app termination means (S311, S312, S212 to S214) for, when requested by another communications unit on the network to terminate a dependent application, terminating the dependent application.
